# EUROPÄISCHE PATENTSCHRIFT

(11) **EP 1 666 290 B1**
(45) Veröffentlichungstag und Bekanntmachung des Hinweises auf die Patenterteilung: **19.12.2007**
(21) Anmeldenummer: 05023734.6
(22) Anmeldetag: 31.10.2005
(51) Int. Cl.: B60J 1/20

(54) **Rolloanordnung mit verdeckter Rastung**
Roller blind arrangement with hidden latching system
Store à enrouleur avec système de blocage caché

(30) Priorität: 02.12.2004 DE 102004058296
(43) Veröffentlichungstag der Anmeldung: 07.06.2006
(73) Patentinhaber: BOS GmbH & Co. KG, 73760 Ostfildern (DE)
(72) Erfinder: Thumm, Andreas, 72622 Nürtingen (DE)
(74) Vertreter: Rüger, Barthelt & Abel Patentanwälte

(56) Entgegenhaltungen:
- EP-A- 1 211 110
- US-A- 5 560 668

## Beschreibung

Der Stand der Technik kennt eine Vielzahl von manuell betätigten Rolloanordnungen bei Kraftfahrzeugen, die dazu dienen, den Lichteintritt in das Fahrzeuginnere zu regulieren. Solche Rolloanordnungen finden sich an den Seitenscheiben oder der Heckscheibe. In jedem Falle gehören zu solchen Rolloanordnungen im Fahrzeug ortsfest gelagerte Wickelwellen, die mittels eines Federmotors in einer Drehrichtung vorgespannt sind. An der Wickelwelle ist eine Rollobahn befestigt, deren freie bewegliche Kante mit einem Zugstab verbunden ist. Der Zugstab wird endseitig in Führungsschienen geführt, die im Fahrzeug fest verankert sind. Hierdurch soll bei ausgefahrenem Rollo ein Klappern verhindert werden, das von einem Anschlagen des Zugstabs an der Scheibe verursacht wird.

Um das Rollo im ausgefahrenen Zustand zu halten wird eine Hakenanordnung verwendet, weil sie sonst von dem Federmotor der Wickelwelle wieder auf die Wickelwelle aufgewickelt und damit eingefahren wird.

Der Haken ist sichtbar und es ist eine entsprechende Hubbewegung erforderlich, um den Eingriff zwischen dem Hakenteilen zu lösen, damit das Rollo wieder eingefahren werden kann.

Aus der EP 1 211 110 A1 ist ein elektrisch betriebenes Heckscheibenrollo bekannt. Zu dem Rollo gehören zwei Führungsschienen, die seitlich der aufgespannten Rollobahn verlaufen. Sie haben den Zweck einerseits die in den Führungsschienen laufenden Schubglieder gegen Ausknicken zu sichern und dienen außerdem dazu, den Zugstab zu führen, der an der Vorderkante der Rollobahn angebracht ist. Der Zugstab ist hierzu dreigeteilt und setzt sich aus einem mittleren mit der Rollobahn fest verbundenen Abschnitt unter zwei teleskopartig verschiebbaren Endstücken zusammen. Die Endstücke tragen an ihren Enden Gleitsteine, mit denen sie in den Führungsschienen laufen. Die Gleitsteine haben die Gestalt eines kurzen Zylinders und sind damit an den Querschnitt der Nutenkammer der Führungsnuten angepasst.

Ausgehend hiervon ist es Aufgabe der Erfindung für eine Rolloanordnung zu schaffen, die leicht in den Führungsschienen läuft.

Diese Aufgabe wird erfindungsgemäß mit der Rolloanordnung mit den Merkmalen des Anspruches 1 gelöst.

Bei der erfindungsgemäßen Rolloanordnung sind Führungsschienen vorgesehen, in denen der Zugstab der Rollobahn geführt ist.

Die Rollobahn erstreckt sich zwischen dem Zugstab und einer Rollo-bzw. Wickelwelle, die neben dem einen Ende der Führungsschienen drehbar gelagert ist. Mit Hilfe eines Federmotors wird die Wickelwelle im Sinne des Aufwickelns der Rollobahn vorgespannt.

Die Führungsschienen haben den Vorteil den Zugstab daran zu hindern durch die allgemeinen Fahrzeugerschütterungen zu Bewegung um die Querachse veranlasst zu werden, was dazu führen würde, dass der Zugstab mit seinen Enden gegen die Scheibe anschlägt und Lärm verursacht.

Um die Rollobahn im ausgefahrenen Zustand zu fixieren, sind zwei Rasteinrichtungen vorgesehen, von denen jede ein erstes und ein zweites Rastwiderlager sowie wenigstens eine Schwenkkante aufweist. Das erste Rastwiderlager kann beispielsweise an dem Zugstab ausgebildet sein, während das zweite Rastwiderlager und die Schwenkkante an der betreffenden Führungsschiene vorhanden sind. Mit Hilfe der Schwenkkante kann der Zugstab an der betreffenden Stelle definiert um eine Achse gedreht werden, die parallel zu seiner Längsachse liegt. Durch diese Drehbewegung des Zugstabs um sich selber oder um eine neben ihm und zu ihm parallel verlaufende Drehachse können die beiden Rastwiderlager miteinander in Eingriff gebracht werden. Bei der entgegengesetzten Drehbewegung kann der Eingriff gelöst werden. Wenn die beiden Rastwiderlager in Eingriff stehen, wird die Rollobahn fixiert, während im anderen Falle die Rollobahn wieder aufgewickelt werden kann.

Da eine Drehbewegung des Zugstabs um eine zu ihm parallele Achse zum Freigeben der Rasteinrichtung führt, kann ohne weiteres die Rasteinrichtung an beiden Enden des Zugstabs simultan entriegelt werden. Es besteht keine Notwendigkeit jede Rasteinrichtung für sich zu entriegeln, was den Bedienungskomfort extrem beeinträchtigen würde. Da zwei Rasteinrichtungen vorgesehen sind, können diese ohne weiteres bei den Führungsschienen untergebracht werden, so dass sie nicht als störender Haken in der Mitte des Fensters in Erscheinung treten. Gleichzeitig ist ohne weiteres die Entriegelung möglich, und zwar gleichgültig davon, wo der Benutzer den Zugstab anfasst und die erforderliche Drehbewegung einleitet.

Die erfindungsgemäße Anordnung eignet sich insbesondere für Heckscheibenfenster, weil es hier sonst schwierig ist, den Zugstab in der gewünschten Weise an den richtigen Ort zu bringen.

Die Führungsschienen können eine Führungsnut enthalten, die sich im Querschnitt gesehen aus einer Nutenkammer und einem Nutenschlitz zusammensetzt, wobei die lichte Weite des Nutenschlitzes kleiner ist, als die lichte Weite der Nutenkammer. Auf diese Weise wird eine hinterschnittene Nut erhalten, die zuverlässig die betreffenden Enden des Zugstabs festhält, um dessen Längenanpassung an gegebenenfalls konvergierende Führungsschienen zu erreichen.

Die Führungsschienen sind in ihrem Verlauf an den Verlauf an der Kante des Fensters angepasst und liegen somit in einer gemeinsamen gegebenenfalls gekrümmten Fläche, deren Krümmungsachsen parallel zueinander liegen. Entsprechend dem Verlauf der Fensterkanten können sie auch aufeinander zu konvergieren, ausgehend von der Wickelwelle.

Die Führungsschienen haben einander gegenüberliegende Flanken. Diese Flanken können von der jeweiligen Schlitzwand und der angrenzenden Wand der Nutenkammer gebildet sein.

Damit sich der Zugstab an die unterschiedlich breiten Fenster anpassen kann setzt er sich zweckmäßigerweise aus einem Mittelstück und in dessen Längsrichtung verstellbaren Endstücken zusammen, die von den Führungsschienen geführt sind. Jedes Endstück weist einen Gleitstein auf, der über ein Halsteil verankert ist. Die Abmessungen des Halsteils sind so gewählt, dass sie durch den Schlitz der Nut hindurchführen, während der Gleitstein in seinem Querschnitt und seiner Gestalt in Längsrichtung an die Nutenkammer angepasst ist.

Falls der Konvergenzwinkel zwischen den Führungsschienen über die Länge der Führungsschienen nicht konstant ist, ist es von Vorteil, wenn der Halsteil gegenüber dem Endstück um eine Achse schwenkbar ist, die im Wesentlichen rechtwinklig zu der Achse der Relativbewegung zwischen dem Mittelstück und dem Endstück verläuft.

Der Gleitstein hat vorteilhafterweise eine längliche Gestalt, in dem Sinne, dass seine Abmessungen in Richtung parallel zur Längserstreckung der Führungsschiene größer sind als die Querabmessungen rechtwinklig dazu.

Damit der Gleitstein auch bei gekrümmt verlaufenden Führungsschienen möglichst frei läuft, ist es bevorzugt tailliert. Dadurch bekommt es von der Seite gesehen gegebenenfalls eine fischähnliche Gestalt.

Damit die Verrastung zuverlässig funktioniert, sind zweckmäßigerweise Vorspannmittel vorgesehen, um den Zugstab bezüglich einer Drehbewegung um eine zu seiner Längsachse parallele Achse in die Eingriffstellung der Rasteinrichtung vorzuspannen.

Diese Vorspanneinrichtung kann die Rollobahn umfassen, die durch den Federmotor im Aufwickelsinne auf die Wickelwelle vorgespannt ist.

Das erste Rastwiderlager kann an dem Zugstab, und das zweite Rastwiderlager sowie die Schwenkkante an den Flanken Führungsschiene vorgesehen sein. Dadurch behält der Führungsstab in jenem Bereich, wo seine Teile mit der Führungsschiene in Eingriff stehen, glatte Konturen, die nicht zum Verklemmen oder Verhaken neigen.

Hingegen ist im Bereich der Führungsschiene ohne weiteres Platz um das zweite Rastwiderlager sowie die Schwenkkante auszubilden.

Das erste Rastwiderlager kann von einem Ende eines Gleitsteins gebildet sein, der mit dem Zugstab verbunden ist, und in der Führungsnut läuft.

Das zweite Rastwiderlager kann von der Kante einer Tasche, einer Ausnehmung oder einer Öffnung in der Führungsschiene gebildet sein, oder auch von einer entsprechenden Wand.

Die Schwenkkante wiederum, die dem ortsfesten Rastwiderlager, d.h. dem zweiten Rastwiderlager gegenüber liegt, wird bevorzugt von einem Rand, einer Tasche, einer Öffnung oder einem Steg gebildet. Diese Strukturen befinden sich auf einer Seite der Führungsschiene, damit die gewünschte Schwenkbewegung zustande kommt. Die entsprechende Schwenk- Achse verläuft im Wesentlichen durch den Schlitz der Führungsnut.

Eine zweite Schwenkkante kann das Entriegeln aus der Raststellung erleichtern und ist deswegen vorteilhaft.

Im Übrigen sind Weiterbildungen der Erfindung Gegenstand von Unteransprüchen.

Bei der Durchsicht der Unterlagen wird dem Fachmann klar, dass eine Reihe von Abwandlungen möglich sind, die sich aus den speziellen Einbaugegebenheiten ergeben. Die Figurenbeschreibung beschränkt sich deswegen auf das für das Verständnis der Erfindung Wesentliche ohne selbstverständliche Abwandlungen zu erläutern.

In der Zeichnung ist ein Ausführungsbeispiel des Gegenstandes der Erfindung dargestellt. Es zeigen:
- Fig. 1: eine schematisch perspektivische Darstellung eines aufgebrochenen Fondbereiches eines Kraftfahrzeuges, mit Blick gegen die Heckscheibe;
- Fig. 2: eine schematische Darstellung des Heckscheibenrollos aus der Darstellung nach Fig. 1;
- Fig. 3: ein Ende des Zugstabs des Rollos nach Fig. 2 in einer schematisierten Explosionsansichtansicht auf die Unterseite und im Ausschnitt; und
- Fig. 4: eine schematisierte Darstellung zum Veranschaulichen des Zusammenwirkens zwischen der Führungsschiene und dem Gleitstein in der Rasstellung.

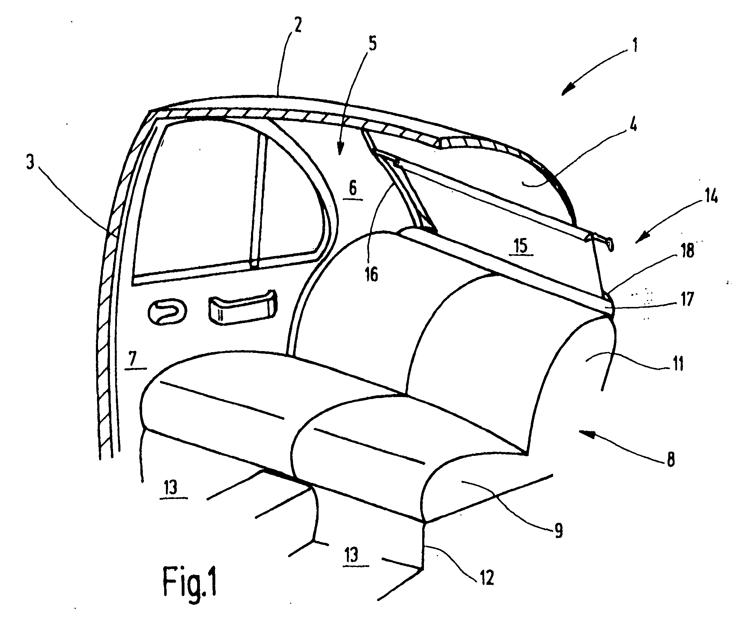

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine Innenverkleidung 6.

Zwischen der B-Säule 3 und der C-Säule 5 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 aus-gebildet sind.

Vor der Innenseite des Heckfensters 4 befindet sich ein Heckscheibenrollo 14. Von dem Heckscheibenrollo 14 ist dessen teilweise ausgezogene Rollobahn 15 sowie eine der seitlichen Führungsschienen 16 zu erkennen. Die Führungsschiene 16 beginnt an einer hinter der Rücksitzlehne 11 vorhandenen Hutablage 17 und verläuft neben der seitlichen Fensterkante. Außerdem enthält die Hutablage 17 einen durchgehendenden Auszugsschlitz 18, aus dem die Rollobahn 15 herausläuft.

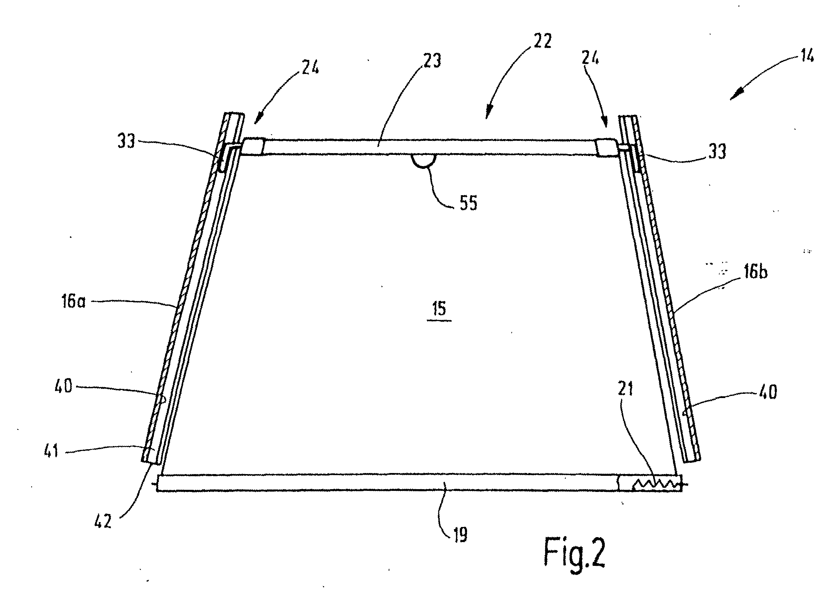

Der prinzipelle Aufbau des Heckscheibenrollos 14 ergibt sich aus Fig. 2. Wie hieraus zu erkennen ist, verläuft parallel zu der bereits erwähnten Führungsschiene 16 eine weitere Führungsschiene, weshalb in Fig. 2 die beiden Führungsschienen mit 16a und 16b bezeichnet sind. Diese beiden Führungsschienen 16a und 16b folgen dem Verlauf der seitlichen Begrenzung des Heckfensters 4, d.h. sie liegen in einer gemeinsamen Fläche, die parallel zu der Heckscheibe gekrümmt ist und sie konvergieren in Richtung auf ihr oberes Ende.

Die beiden Führungsschienen 16a und 16b sind vorzugsweise in der Seitenverkleidung 8 der beiden C-Säulen 5 integriert und sie beginnen auf der Höhe des Schlitzes 18 in der Hutablage 17. Unterhalb dieser Hutablage 17 ist in der Karosserie eine Wickelwelle 19 drehbar gelagert. Die Wickelwelle 19 wird mit Hilfe eines Federmotors 21, beispielsweise in Gestalt einer Schraubenfeder in Aufwickelrichtung der Rollobahn vorgespannt. Hierzu ist die Schraubenfeder 21 einends, wie schematisch angedeutet, in der rohrförmigen Wickelwelle 19 verankert. Ihr anderes Ende ist in dem Fahrzeug festgelegt, und zwar neben dem betreffenden Ende der Wickelwelle 19.

Die Rollobahn 15 besteht aus einem flexiblen biegeschlaffen Material, beispielsweise einer dünnen gelochten Kunststofffolie oder einem Gewirke. Sie hat einen Zuschnitt, der etwa trapezförmig und so gewählt ist, dass im ausgezogenen Zustand das Heckfenster 4 möglichst weitgehend abgeschattet wird.

Mit einer Kante ist die Rollobahn 15 an der Wickelwelle 19 befestigt. Ihr anderes, von der Wickelwelle 19 abliegendes Ende ist an einem Zugstab 22 verankert, der in jeder Betriebsstellung zu der Wickelwelle 19 parallel liegt.

Der Zugstab 22 setzt sich aus einem starren Mittelstück 23 und zwei dagegen beweglichen Endstücken 24 zusammen. Die Endstücke 24 sind gegenüber dem Mittelstück teleskopartig in dessen Längsrichtung verschiebbar, um so dem konvergierenden Verlauf zwischen den beiden Führungsschienen 16a und 16b folgen zu können.

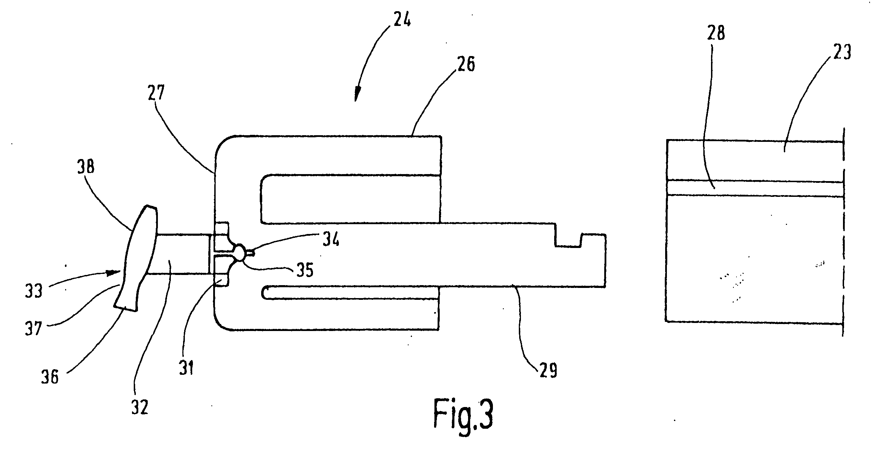

Wie Fig. 3 erkennen lässt, sind die Endstücke 24 etwa becherförmig und nach unten in Richtung auf die Hutablage zu offen. Sie bilden einen Kragen 26 mit einer nach unten zeigenden Öffnung in der Flanke und einer in Richtung auf die Führungsschiene 16a bzw. 16b zeigenden Seitenwand 27. In dem so erhaltenen Gebilde ist innerhalb des Kragens 26 das Mittelstück 23 längs verschieblich.

Das Mittelstück 23 ist an seiner Unterseite mit einer nach unten zeigenden Kedernut 28 versehen, in die das freie Ende der Rollobahn 15 entsprechend eingehängt ist.

Da das Endstück 24 mit seinem Kragen 26 zur Unterseite hin offen ist und diese Öffnung entsprechend gewählt ist, kollidiert der Kragen 26 nicht mit den Rändern der in der Kedernut 28 sitzenden Rollobahn 15.

Aus der Wand 27 steht ein Zapfen 29 vor, der in das Innere des rohrförmigen Mittelstücks 23 ragt und dort entsprechend geführt ist, um einen klemmfreien Schiebesitz des Endstücks 24 gegenüber dem Mittelstück 23 zu erreichen.

In der Seitenwand 27 ist in Verlängerung des Stabs 29 eine Tasche 31 enthalten, die sich in Richtung von dem Stab 29 bzw dem Mittelstück 23 weg öffnet. Die Tasche 31 dient der Aufnahme eines Halsteils 32, an dessen freien Ende ein rotationssymmetrischer Gleitstein 33 angeordnet sind. Der Halsteil 32 und der GLeitstein 33 sind aus einem Teil gespritzt und somit einstückig.

Der Halsteil 32 weist einen rechteckigen Querschnitt auf und ist in Richtung senkrecht zur Zeichenebene wesentlich dünner als die sichtbare Flachseite. Die Höhe der Tasche 31, die im Querschnitt etwa rechteckig ist, ist an die Gestalt des Halsteils 32 angepasst.

Das Halsteil 32 ist in der Tasche 31 um einer auf der Zeichenebene senkrechte Ebene bedingt schwenkbar. Hierzu ist an dem Halsteil 32 ein Zapfen 34 ausgebildet, der in einer entsprechenden Ausnehmung 35 in der sichtbaren Wand der Tasche 31 verrastet ist. Die Ausnehmung 35 hat eine teilzylindrische Gestalt und öffnet sich in derselben Richtung wie die Tasche 31, damit von daher das Halsteil 32 eingeschoben werden kann und der Zapfen 34 in der Ausnehmung 35 schwenkbar verrasten kann.

Der Gleitstein 33 hat, wie gezeigt, eine etwa fischförmige Seitenansicht mit einer rückwärtigen planen Widerlagerfläche 36, einem taillieren Abschnitt 37 und einem vorderen, etwa zuckerhutförmigen Abschnitt 38.

Der Gleitstein 33 ist im Übrigen rotationssymmetrisch und außerdem ist der vordere Abschnitt 38 an seiner größten Stelle genauso dick im Durchmesser, wie die rückwärtige Widerlagerfläche 36. Diese Fläche ist plan und liegt rechtwinklig zur Längsachse des Gleitsteins 33.

Die beiden Führungsschienen 16a und 16b enthalten jeweils eine Führungsnut 40, die in ihren Proportionen an den Gleitstein 33 und dessen Halsteil 32 angepasst sind. Hierzu setzt sich jede Führungsnut 40 aus einer Nutenkammer 41 mit kreisförmigem Querschnitt und einem Nutenschlitz 42 zusammen. Der Durchmesser der Nutenkammer 41 ist geringfügig größer als der größte Durchmesser des Gleitsteins 33. Die Weite des Schlitzes 42 ist etwas größer, als es der Dicke des Halsteils 32 entspricht.

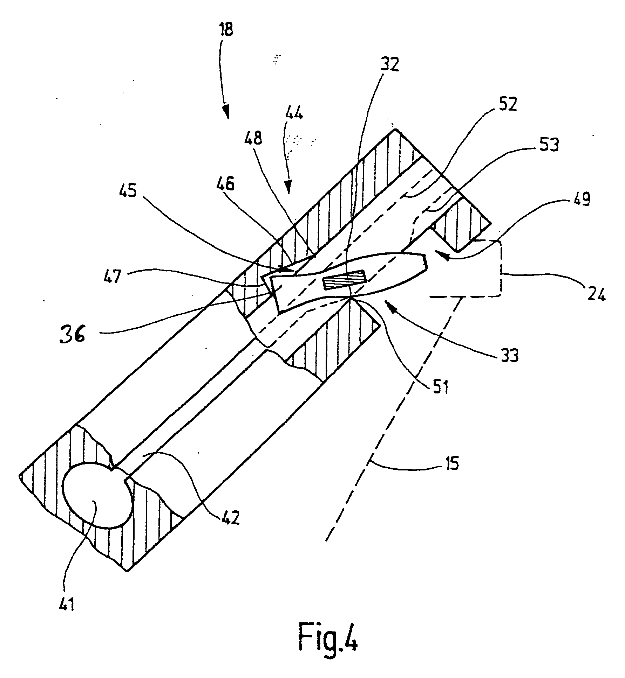

Fig. 4 zeigt in einer vergrößerten, stark schematischen Darstellung nochmals einen Ausschnitt aus einer der Führungsschienen 16, mit der darin enthaltenen kreisförmigen Nutenkammer 41 und den hiervon ausgehenden Nutenschlitz 42. Es versteht sich, dass die Nutenschlitze 42 der beiden Führungsschienen 16a und 16b aufeinander zu ausgerichtet sind.

Im oberen, d.h. von der Wickelwelle 19 abliegenden Bereich enthält jede der Führungsschienen 16a bzw. 16b einen Teil einer Rasteinrichtung 44. Die Darstellung ist sehr stark schematisiert und vergrößert, um das Wesentliche erkennen zu können.

Entsprechend der Einbaulage der Führungsschienen 16 in dem Kraftfahrzeug entspricht die linke Begrenzungslinie der Nutenkammer 41 in dem aufgeschnittenen Bereich der oberen Seite bzw. dem oberen Bereich der Nutenkammer 41, während die gegenüberliegende Seite die Unterseite darstellt. In der oberen Wand der Nutenkammer 41 ist in deren Oberseite eine Tasche 45 enthalten, die die Gestalt eines Kegelabschnitts hat. Sie wird von einer kegelabschnittrmigen Seitenwand 46 und einer im Winkel dazu verlaufenden Fläche 47 begrenzt. Die Fläche 47 ist eine ebene Fläche und sie verläuft unter einem Winkel, der nur um wenige Grad von der Senkrechten auf die Längsachse der Nutenkammer 41 an dieser Stelle abweicht. Die Fläche 47 wirkt, wie weiter unten noch erläutert ist, als Widerlagerfläche und wird deswegen im Weiteren auch als Widerlagerfläche bezeichnet.

Die Wand 46 geht an ihrem von der Widerlagerfläche 47 abliegenden Ende über eine parabelfömig gekrümmte Kante 48 in die Wand der Nutenkammer 41 über.

Der am weitesten von der Widerlagerfläche 47 abliegende Teil bildet, wie weiter unten erläutert ist, eine Schwenkkante.

Die Nutenkammer 41 enthält an ihrer Unterseite eine etwa rechteckförmige Öffnung 49, mit einer Schwenkkante 51, die etwa auf der Höhe der Schwenkkante 48 liegt. Die Länge der rechteckförmigen Öffnung 49 ist ausreichend bemessen, um den vorderen Abschnitt 38 des Gleitsteins 33 aufzunehmen. Außerdem liegt die Schwenkkante 51 etwa auf der Höhe der Schwenkkante 48, bezogen auf den Abstand von der Wickelwelle. Der Rest der Öffnung 49 ist von der Wickelwelle weiter beabstandet als die Tasche 45.

Im Bereich der Öffnung 49 ist der Schlitz 42 geringfügig erweitert. Der obere Rand 52 läuft ununterbrochen durch, während der untere Rand 53, wie gestichelte Linie zeigt, geringfügig nach unten versetzt ist.

Die Funktionsweise der Anordnung ist wie folgt:

Im Ruhezustand ist die Rollobahn 15 zur Gänze auf der Wickelwelle 19 aufgewickelt. In dieser Position liegt der Zugstab 22 auf dem Auszugsschlitz 18 der Hutablage 17 auf. Die Gleitsteine 33 stecken nach wie vor in den Führungsnuten 40. Ihr zugespitztes Ende, d.h. der Abschnitt 38 zeigt in Richtung von der Wickelwelle 19 weg.

Aufgrund der versetzten Verankerung der Rollobahn 15 an dem Zugstab 22 erzeugt die Rollobahn 15, die über den Federmotor 21 vorgespannt ist, ein geringfügiges Kippmoment um eine Achse, die parallel zu der Längsachse des Zugstabs 22 liegt und die etwa durch einen Bereich des Halsteils 32 hindurch führt. Die Anlenkung der Rollobahn 15 an dem Zugstab 22 ist in Fig. 4 als Relation zu dem Endstück 24 angedeutet. Hieraus ergibt sich auch, dass die Rollobahn 15 näher zum Fahrzeuginnerenraum liegt als die Führungsschiene 16. Die Führungsschiene 16 erstreckt sich mit anderen Worten zwischen der Rollobahn 15 und der Heckscheibe 4.

Um das Rollo 14 manuell auszufahren, ist etwa in der Mitte des Zugstabs 22 an dem Mittelstück 23 eine Grifflasche 55 vorgesehen. Der Benutzer kann diese Grifflasche 55 mit den Fingern greifen und so den Zugstab 22 längs den beiden Führungsschienen 16a und 16b von der Wickelwelle 19 weg bewegen.

Wenn der Benutzer den Zugstab 22 genügend weit weg bewegt hat, wird die Widerlagerfläche 36, d.h. die hintere oder untere Fläche des Gleitsteins 33 die Widerlagerfläche 47 passieren. Aufgrund der Vorspannung durch die Rollobahn 15 und die von Hand eingeleitete Kraft können die beiden Gleitsteine 33 eine kurze Dreh- oder Kippbewegung um die Schwenkkante 51 vollführen. Bei der Schwenkbewegung taucht, wie Fig. 4 zeigt, der vordere Abschnitt 38 in die Ausnehmung 49 ein, während der hintere Teil des Gleitsteins mit der Widerlagerfläche 36 in die Tasche 45 gelangt.

Sobald diese Position erreicht ist, kann der Benutzer die Lasche 55 loslassen. Die Wirkung der vorgespannten Rollobahn 15 ist bestrebt, weiterhin die Gleitsteine 33 um die Schwenkkante 51 zu verschwenken, so dass die rückwärtige Widerlagerfläche 36 mit der Widerlagerfläche 47 oder der entsprechenden Begrenzungskante in Eingriff bleiben. Damit ist eine Verrastung eingetreten und der Federmotor 21 wird daran gehindert die Rollobahn 15 wieder auf die Wickelwelle 19 aufzuwickeln.

Die erläuterte Verrastung tritt an beiden Seiten des Zugstabs 22 praktisch gleichzeitig auf.

Es versteht sich, dass hierzu die Taschen 45 und die Öffnung 49 in beiden Führungsschienen 16a und 16b sinngemäß an derselben Stelle, bezogen auf den Abstand von der Wickelwelle 19 liegen.

Wenn der Benutzer das manuell betätigte Rollo 14 wieder einfahren will, erfasst er wiederum die Lasche 55, jetzt jedoch so, dass er das von der Rollobahn 15 ausgeübte Drehmoment aufhebt und hierdurch die beiden Gleitsteine 33 wiederum in eine Lage bringt, in der die Längsachse des Gleitsteins 33 mit der Längsachse der Nutenkammer 41 an der betreffenden Stelle übereinstimmt. Dieses Rückschwenken kann erleichtert werden, indem der Gleitstein an der Schwenkkante 48 und somit im Abstand zu der Widerlagerfläche 47 in Anlage kommt. Die Rastwirkung zwischen der Widerlagerfläche 47 und der Widerlagerfläche 36 an dem Gleitstein 33 wird dadurch aufgehoben und der Benutzer kann den Zugstab 22 in Richtung auf die Wickelwelle 19 führen, wobei gleichzeitig die Rollobahn 15 auf der Wickelwelle 19 aufgewickelt wird.

Wie Fig. 4 erkennen lässt, muss im Bereich des Schlitzes 42 dort, wo die Verrastung und die Kippbewegung auftritt, Platz für das Verschwenken des Halsteils 32 geschaffen werden, weshalb der untere Rand 53, dort wie gezeigt, zurückweicht.

Es ist außerdem leicht zu verstehen, dass die Verrastung nicht nur im Bereich des oberen Endes der beiden Führungsschienen 16a und 16b erfolgt, sondern beispielsweise auch in einem mittleren Bereich. Hierzu genügt es, dass die Anordnung aus der Tasche 45 und der Öffnung 49 an der geeigneten Stelle im Verlauf der Führungsschienen 16a und 16b zwischen der Wickelwelle 19 somit der Ruhelage unter der voll ausgezogenen Lage, entsprechend Fig. 4, angeordnet wird.

Ein manuell betätigtes Heckscheibenrollo weist zwei seitliche Führungsschienen auf. In den beiden Führungsschienen läuft ein Zugstab, der mit länglichen Gleitsteinen versehen ist. Die Gleitsteine können zusammen mit dem Zugstab eine Schwenkbewegung um eine Achse parallel zu dem Zugstab vollführen. Dadurch können sich die Gleitsteine in beiden Führungsschienen in entsprechenden Rasttaschen verhaken. Durch manuelles Drehen des Zugstabs in der entgegengesetzten Richtung kann die Verrastung aufgehoben werden.

## Patentansprüche

1. Rolloanordnung
mit einem Zugstab (22), der sich aus einem mit einer Rollobahn (15) verbundenen Mittelstück (23) und zwei gegenüber dem Mittelstück (23) in dessen Längsrichtung verstellbaren Endstücken (24) zusammensetzt, die von Führungsschienen (16) geführt sind, und
mit einem Gleitstein (33), der mit dem Zugstab (22) verbunden ist, und der eine längliche Gestalt aufweist, in dem Sinne, dass seine Abmessung in Richtung parallel zur Längserstreckung einer Führungsschiene (16) größer is als die Querabmessung rechtwinklig dazu, **dadurch gekennzeichnet dass,** der Gleitstein (33) in einem zwischen seinen beiden Enden (38,36) liegenden Bereich (37) einen verminderten Durchmesser aufweist.

2. Rolloanordnung nach Anspruch 1, mit einer drehbar gelagerten Rollowelle (19), die mittels eines Federmotors (21) in einer Drehrichtung vorgespannt ist.

3. Rolloanordnung nach Anspruch 1, mit zwei in Abstand zueinander verlaufenden Führungsschienen (16).

4. Rolloanordnung nach Anspruch 2, wobei die Rollobahn (15) mit einer Kante an der Rollowelle (19) befestigt ist und eine von der Rollowelle (19) abliegende bewegliche Kante aufweist.

5. Rolloanordnung nach den Ansprüchen 3 und 4, wobei der Zugstab (22) mit der beweglichen Kante verbunden ist und mit einem Ende von der einen Führungsschiene (16a) und mit seinem anderen Ende von der anderen Führungsschiene (16b) geführt ist.

6. Rolloanordnung nach Anspruch 2, mit zwei Rasteinrichtungen (36,47,48,51),
- die dazu dienen den Zugstab (22) an einer von der Rollowelle (19) abliegenden Stelle mit jeweils einer Führungsschiene (16) lösbar zu verrasten,
- von denen jede am oder in der Nähe jedes Endes des Zugstabs (22) wirksam ist,
- von denen jede ein erstes Rastwiderlager (36,47), ein zweites Rastwiderlager (36,47) und wenigstens eine Schwenkkante (48,51) aufweist, die parallel zu der Längsachse des Zugstabs (22) liegt und die derart angeordnet ist, dass eine Verschwenkung des Zugstabs (22) um die durch die Schwenkanten (51) der beiden Rasteinrichtungen (36,47,48,51) definierte Achse dazu führt, dass die beiden Rastwiderlager (36,47) jeder Rasteinrichtung (36,47,48,51) miteinander in Eingriff kommen oder dass der Eingriff gelöst wird.

7. Rolloanordnung nach Anspruch 3, **dadurch gekennzeichnet, dass** jede Führungsschiene (16) eine Führungsnut (40) enthält, die sich, im Querschnitt gesehen, aus einer Nutenkammer (41) und einem Nutenschlitz (42) zusammensetzt, wobei die lichte Weite des Schlitzes (42) kleiner ist als die lichte Weite der Nutenkammer (41) derart, dass sich eine hinterschnittene Führungsnut (40) ergibt.

8. Rolloanordnung nach Anspruch 3, **dadurch gekennzeichnet, dass** jede Führungsschiene (16) zwei im Wesentlichen parallel im Abstand zueinander verlaufende Führungsflanken aufweist.

9. Rolloanordnung nach Anspruch 7 und 8, **dadurch gekennzeichnet, dass** eine Führungsflanke von einer Wand des Schlitzes (42) und dem daran angrenzenden Bereich der Wand der Nutenkammer (41), und die andere Führungsflanke von der gegenüberliegenden Wand des Schlitzes (42) und dem daran angrenzenden Bereich der Wand der Nutenkammer (41) gebildet ist.

10. Rolloanordnung nach Anspruch 3, **dadurch gekennzeichnet, dass** die Führungsschienen (16) in einer gemeinsamen Fläche liegen.

11. Rolloanordnung nach Anspruch 3, **dadurch gekennzeichnet, dass** die Führungsschienen, ausgehend von der Rollowelle in Richtung auf ihr von der Rollowelle abliegendes Ende, konvergieren.

12. Rolloanordnung nach Anspruch 1, **dadurch gekennzeichnet, dass** jedes Endstück (24) einen Gleitstein (33) aufweist, der über ein Halsteil (32) verankert ist, dessen Abmessungen so gewählt sind, dass es durch den Schlitz der Führungsnut (40) hindurch passt und dass der Gleitstein (33) in seinem Querschnitt und seiner Gestalt in Längsrichtung an die Nutenkammer (41) angepasst ist.

13. Rolloanordnung nach Anspruch 12, **dadurch gekennzeichnet, dass** jeder Gleitstein (33) mit dem daran befestigten Halsteil (32) gegenüber dem Endstück (25) schwenkbar ist um eine Achse, die rechtwinklig zu der Achse der Relativbewegung zwischen dem Mittelstück (23) und dem Endstück (24) verläuft.

14. Rolloanordnung nach Anspruch 1, **dadurch gekennzeichnet, dass** der Gleitstein (33) von der Seite gesehen eine fischähnliche Gestalt aufweist.

15. Rolloanordnung nach Anspruch 6, **dadurch gekennzeichnet, dass** Vorspannmittel (15,21) vorgesehen sind, um den Zugstab (22), bezüglich einer Drehbewegung um eine zu seiner Längsachse parallelen Achse in die Eingriffsstellung der Rasteinrichtungen (36,47,48,51) vorzuspannen.

16. Rolloanordnung nach Anspruch 15, **dadurch gekennzeichnet, dass** die Vorspanneinrichtung (15,21), die unter der Wirkung des Federmotors (21) stehende Rollobahn (15) umfasst, die im radialen Abstand zu der von den beiden Schwenkkanten (51) definierten Achse an dem Zugstab (22) befestigt ist.

17. Rolloanordnung nach Anspruch 6, **dadurch gekennzeichnet, dass** das erste Rastwiderlager (36) an dem Zugstab (22) und dass das zweite Rastwiderlager (47) sowie die Schwenkkante (51) an der Führungsschiene (16) vorgesehen sind.

18. Rolloanordnung nach den Ansprüchen 2 und 6, **dadurch gekennzeichnet, dass** das erste Rastwiderlager (36) von derjenigen Endfläche des Gleitsteins (33) gebildet ist, der der Rollowelle (19) zugekehrt ist.

19. Rolloanordnung nach Anspruch 6, **dadurch gekennzeichnet, dass** das zweite Rastwiderlager (47) von einer Kante oder Fläche (47) einer Tasche (45), Ausnehmung oder Öffnung in der Führungsschiene (16) gebildet ist.

20. Rolloanordnung nach Anspruch 17, **dadurch gekennzeichnet, dass** die Schwenkkante (51) von einem Rand (51) oder Kante einer Tasche, einer Öffnung (49) oder eines Stegs in einer Flanke der Führungsschiene (16) gebildet ist.

21. Rolloanordnung nach Anspruch 6, **dadurch gekennzeichnet, dass** jede Rasteinrichtung (36,47,48,51) eine zweite Schwenkkante (48) aufweist, um die eine Drehung des Zugstabs (23) im Sinne des Entrastens erfolgt.

## Claims

1. Roller blind arrangement
with a pull rod (22), which comprises a central piece (23) connected to a blind sheet (15) and two end pieces (24), which can be adjusted in relation to the central piece (23) in the longitudinal direction thereof and are guided by guide rails (16), and
with a slide block (33), which is connected to the pull rod (22) and has an elongated shape, such that its dimension in a direction parallel to the longitudinal extent of a guide rail (16) is greater than the transverse dimension at right angles thereto, **characterised in that** the slide block (33) has a reduced diameter in a region (37) located between its two ends (38, 36).

2. Roller blind arrangement according to claim 1, with a rotatably disposed blind shaft (19), which is biased in a direction of rotation by means of a spring motor (21).

3. Roller blind arrangement according to claim 1, with two guide rails (16) running at a distance from one another.

4. Roller blind arrangement according to claim 2, wherein the blind sheet (15) is fastened to the blind shaft (19) at one edge and has a movable edge remote from the blind shaft (19).

5. Roller blind arrangement according to claims 3 and 4, wherein the pull rod (22) is connected to the movable edge and is guided at one end by one guide rail (16a) and at its other end by the other guide rail (16b).

6. Roller blind arrangement according to claim 2 with two locking means (36, 47,48,51),
• which serve to detachably lock the pull rod (22) to a respective guide rail (16) at a location remote from the blind shaft (19),
• each of which is active on or in the vicinity of each end of the pull rod (22),
• each of which has a first catch stop (36, 47), a second catch stop (36, 47) and at least one pivot edge (48, 51), which lies parallel to the longitudinal axis of the pull rod (22) and which is arranged in such a way that a pivoting movement of the pull rod (22) around the axis defined by the pivot edges (51) of the two locking means (36, 47, 48, 51) causes the two catch stops (36, 47) of each locking means (36, 47, 48, 51) to come into engagement with one another or causes the engagement to be released.

7. Roller blind arrangement according to claim 3, **characterised in that** each guide rail (16) contains a guide groove (40), which when viewed in cross-section comprises a groove chamber (41) and a groove slot (42), wherein the width of the slot (42) is smaller than the width of the groove chamber (41), such that an undercut guide groove (40) results.

8. Roller blind arrangement according to claim 3, **characterised in that** each guide rail (16) has two guide flanks running at a distance from and substantially parallel to one another.

9. Roller blind arrangement according to claim 7 and 8, **characterised in that** one guide flank is formed by a wall of the slot (42) and the adjoining region of the wall of the groove chamber (41), and the other guide flank is formed by the opposite wall of the slot (42) and the adjoining region of the wall of the groove chamber (41).

10. Roller blind arrangement according to claim 3, **characterised in that** the guide rails (16) lie in a common surface.

11. Roller blind arrangement according to claim 3, **characterised in that** starting from the blind shaft, the guide rails converge towards their end remote from the blind shaft.

12. Roller blind arrangement according to claim 1, **characterised in that** each end piece (24) has a slide block (33), which is anchored by means of a throat part (32), the dimensions of which are selected so that it passes through the slot of the guide groove (40) and that the slide block (33) is adapted in its cross-section and shape in longitudinal direction to the groove chamber (41).

13. Roller blind arrangement according to claim 12, **characterised in that** each slide block (33) can be pivoted with the throat part (32) fastened thereto relative to the end piece (25) around an axis, which runs at right angles to the axis of the relative movement between the central piece (23) and the end piece (24).

14. Roller blind arrangement according to claim 1, **characterised in that** the slide block (33) has a fish-like shape viewed from the side.

15. Roller blind arrangement according to claim 6, **characterised in that** biasing elements (15, 21) are provided to bias the pull rod (22) with respect to a rotational movement around an axis parallel its longitudinal axis into the engagement position of the locking means (36, 47, 48, 51).

16. Roller blind arrangement according to claim 15, **characterised in that** the biasing means (15, 21) encompasses the blind sheet (15) standing under the effect of the spring motor (21), which blind sheet is fastened to the pull rod (22) at a radial distance from the axis defined by the two pivot edges (51).

17. Roller blind arrangement according to claim 6, **characterised in that** the first catch stop (36) is provided on the pull rod (22) and that the second catch stop (47) and also the pivot edge (51) is provided on the guide rail (16).

18. Roller blind arrangement according to claims 2 and 6, **characterised in that** the first catch stop (36) is formed by the end face of the slide block (33) facing the blind shaft (19).

19. Roller blind arrangement according to claim 6, **characterised in that** the second catch stop (47) is formed by an edge or face (47) of a pocket (45), recess or opening in the guide rail (16).

20. Roller blind arrangement according to claim 17, **characterised in that** the pivot edge (51) is formed by a boundary (51) or edge of a pocket, an opening (49) or a web in a flank of the guide rail (16).

21. Roller blind arrangement according to claim 6, **characterised in that** each locking means (36, 47, 48, 51) has a second pivot edge (48), around which a rotation of the pull rod (23) occurs in the direction of unlocking.

## Revendications

1. Dispositif de store à enrouleur comprenant
une barre de traction (22) qui se compose d'une portion médiane (23), reliée à une bande de store (15), et de deux portions d'extrémité (24) qui peuvent être déplacées par rapport à la portion médiane (23), dans la direction longitudinale de celle-ci, et sont guidées par des rails de guidage (16), et comprenant
un coulisseau (33) qui est relié à la barre de traction (22) et présente une forme allongée, en ce sens que sa dimension dans la direction qui est parallèle à la longueur d'un rail de guidage (16) est plus grande que sa dimension transversale, perpendiculairement au rail, **caractérisé par le fait que** le coulisseau (33) présente un diamètre réduit dans une portion (37) située entre ses deux extrémités (38, 36).

2. Dispositif de store selon la revendication 1, comprenant un arbre de store (19) qui est monté avec possibilité de rotation et est mis sous précontrainte dans un sens de rotation au moyen d'un moteur à ressort (21).

3. Dispositif de store selon la revendication 1, comprenant deux rails de guidage (16) s'étendant à distance l'un de l'autre.

4. Dispositif de store selon la revendication 2, dans lequel la bande de store (15) est fixée par un bord à l'arbre de store (19) et présente un bord mobile qui est éloigné de l'arbre de store (19).

5. Dispositif de store selon les revendications 3 et 4, dans lequel la barre de traction (22) est reliée au bord mobile et est guidée à une extrémité par l'un des rails de guidage (16a) et à son autre extrémité par l'autre rail de guidage (16b).

6. Dispositif de store selon la revendication 2, comprenant deux dispositifs de blocage (36, 47, 48, 51)
- qui servent à bloquer la barre de traction (22) de manière libérable respectivement sur l'un des rails de guidage (16), à un endroit éloigné de l'arbre de store (19),
- qui agissent chacun au niveau de chaque extrémité de la barre de traction (22) ou à proximité de chaque extrémité,
- qui présentent chacun un premier contre-appui de blocage (36, 47), un deuxième contre-appui de blocage (36, 47) et au moins une arête de pivotement (48, 51) qui est parallèle à l'axe longitudinal de la barre de traction (22) et est disposée de manière telle qu'un pivotement de la barre de traction (22) autour de l'axe défini par les arêtes de pivotement (51) des deux dispositifs de blocage (36, 47, 48, 51) ait pour effet que les deux contre-appuis de blocage (36, 47) de chaque dispositif de blocage (36, 47, 48, 51) entrent en prise l'un avec l'autre ou se dégagent l'un de l'autre.

7. Dispositif de store selon la revendication 3, **caractérisé par le fait que** chaque rail de guidage (16) comporte une rainure de guidage (40) qui, vue en coupe transversale, se compose d'une chambre de rainure (41) et d'une fente de rainure (42), la largeur intérieure de la fente (42) étant inférieure à la largeur intérieure de la chambre de rainure (41), de manière à former une rainure de guidage (40) en contre-dépouille.

8. Dispositif de store selon la revendication 3, **caractérisé par le fait que** chaque rail de guidage (16) présente deux flancs de guidage qui s'étendent sensiblement parallèlement l'un à l'autre et à distance l'un de l'autre.

9. Dispositif de store selon les revendications 7 et 8, **caractérisé par le fait qu'**un flanc de guidage est formé par une paroi de la fente (42) et par la zone adjacente de la paroi de la chambre de rainure (41) et l'autre flanc de guidage est formé par la paroi opposée de la fente (42) et par la zone adjacente de la chambre de rainure (41).

10. Dispositif de store selon la revendication 3, **caractérisé par le fait que** les rails de guidage (16) se situent dans un même plan.

11. Dispositif de store selon la revendication 3, **caractérisé par le fait que**, partant de l'arbre de store, les rails de guidage sont convergents en direction de leur extrémité éloignée de l'arbre de store.

12. Dispositif selon la revendication 1, **caractérisé par le fait que** chaque portion d'extrémité (24) présente un coulisseau (33) qui est ancré par l'intermédiaire d'une partie formant col (32) dont les dimensions sont choisies telles qu'elle passe dans la fente de la rainure de guidage (40), et **par le fait que** la section transversale et la forme du coulisseau (33) sont adaptées à la chambre de rainure (41), dans la direction longitudinale.

13. Dispositif de store selon la revendication 12, **caractérisé par le fait que** chaque coulisseau (33), avec le col (32) qui y est fixé, peut pivoter par rapport à la portion d'extrémité (25) autour d'un axe qui est perpendiculaire à l'axe du mouvement relatif entre la portion médiane (23) et la portion d'extrémité (24).

14. Dispositif de store selon la revendication 1, **caractérisé par le fait que**, vu de côté, le coulisseau (33) présente une forme ressemblant à un poisson.

15. Dispositif de store selon la revendication 6, **caractérisé par le fait qu'**il est prévu des moyens de précontrainte (15, 21) pour mettre la barre de traction (22) sous précontrainte dans le sens d'une rotation autour d'un axe qui est parallèle à son axe longitudinal, afin de l'amener dans la position ou les dispositifs de blocage (36, 47, 48, 51) sont en prise.

16. Dispositif de store selon la revendication 15, **caractérisé par le fait que** le dispositif de précontrainte (15, 21) comprend la bande de store (15) qui est soumise à l'action du moteur à ressort (21) et est fixée à la barre de traction (22), à distance radiale de l'axe défini par les deux arêtes de pivotement (51).

17. Dispositif de store selon la revendication 6, **caractérisé par le fait que** le premier contre-appui de blocage (36) est prévu sur la barre de traction (22) et **par le fait que** le deuxième contre-appui de blocage (47) ainsi que l'arête de pivotement (51) sont prévus sur le rail de guidage (16).

18. Dispositif de store selon les revendications 2 et 6, **caractérisé par le fait que** le premier contre-appui de blocage (36) est formé par la surface terminale du coulisseau (33) qui est tournée vers l'arbre de store (19).

19. Dispositif de store selon la revendication 6, **caractérisé par le fait que** le deuxième contre-appui de blocage (47) est formé par une arête ou une surface (47) d'un logement (45), d'un évidement ou d'une ouverture ménagé(e) dans le rail de guidage (16).

20. Dispositif de store selon la revendication 17, **caractérisé par le fait que** l'arête de pivotement (51) est formée par un bord (51) ou une arête d'un logement, d'une ouverture (49) ou d'une nervure dans l'un des flancs du rail de guidage (16).

21. Dispositif de store selon la revendication 6, **caractérisé par le fait que** chaque dispositif de blocage (36, 47, 48, 51) présente une deuxième arête de pivotement (48) autour de laquelle s'effectue une rotation de la barre de traction (22), dans le sens de la libération du blocage.
